Europäisches Patentamt

European Patent Office

Office européen des brevets

(11) Veröffentlichungsnummer: **0 312 710**

**A2**

(12) **EUROPÄISCHE PATENTANMELDUNG**

(21) Anmeldenummer: 88111512.5

(51) Int. Cl.4: **F16H 55/14 , F16H 55/18**

(22) Anmeldetag: 18.07.88

(30) Priorität: 19.10.87 DE 3735335

(43) Veröffentlichungstag der Anmeldung:
26.04.89 Patentblatt 89/17

(84) Benannte Vertragsstaaten:
DE ES FR GB IT SE

(71) Anmelder: **Dr.Ing.h.c. F. Porsche**
**Aktiengesellschaft**
**Porschestrasse 42**
**D-7000 Stuttgart 40(DE)**

(72) Erfinder: **Könneker, Reinhard, Dipl.-Ing.**
**Bergstrasse 20**
**D-7251 Mönsheim(DE)**

(54) **Vorrichtung zur Drehschwingungsentkopplung in einem Zahnradgetriebe.**

(57) Als Vorrichtung zur Entkopplung von Drehschwingungen in einem Zahnradgetriebe, z. B. einem Steuergetriebe eines Hubkolbenmotors dient ein verzahnter, federnder Entkopplungsradsatz aus einem Mittenrad und zwei beidseitig an ihm anliegenden, koaxialen Verspannrädern. Im Mittenrad tangential liegende Zugfedern ragen mit ihren beiden Federenden aus ihm heraus und sind am linken und rechten Verspannrad eingehängt.

Fig.2

# Vorrichtung zur Drehschwingungsentkopplung in einem Zahnradgetriebe

Die Erfindung betrifft eine Vorrichtung zur Entkopplung von Drehschwingungen in einem Zahnradgetriebe nach dem Oberbegriff des Anspruchs 1.

In Zahnradgetriebe, die zur Drehmomentübertragung dienen, werden häufig von der Antriebsseite oder Abtriebsseite Drehschwingungen eingeleitet. Diese führen zu einer Wechselanlage an den Zahnflanken. Sie verursachen Rasselgeräusche und mitunter auch den Bruch von Zähnen. Bedingt durch Gas- und Massenkräfte am Kurbeltrieb treten solche Drehschwingungen besonders ausgeprägt an Kurbelwellen von Hubkolbenmotoren auf. Wird zwischen Kurbelwelle und Nockenwelle ein Steuergetriebe aus Stirnzahnrädern benutzt, was für eine präzise Steuerung vorteilhafter ist als ein Ketten- oder Riemenantrieb, so werden diese Drehschwingungen in das Steuergetriebe eingeleitet. Da zugleich auch von der Nockenwelle her Drehschwingungen in das Steuergetriebe gelangen, können sich beide Drehschwingungen an einer Stelle im Steuergetriebe so ungünstig überlagern, daß Getriebewellen brechen.

Eine Entkopplungsvorrichtung für Drehschwingungen ist aus US-PS 2 996 806 bekannt; sie heißt dort "antibacklash gear", eine Bezeichnung, die oft auch in der deutschen Fachliteratur verwendet wird. Zwischen einem Antriebszahnrad und einem Abtriebszahnrad ist ein Entkopplungsradsatz angeordnet, der aus drei koaxial nebeneinanderliegenden, durch Federn gegeneinander verspannten Zahnrädern besteht. Das linke Verspannrad und das Mittenrad kämmen mit dem Antriebszahnrad, das rechte Verspannrad und das Mittenrad mit dem Abtriebszahnrad. Durch eine Feder ist das rechte Verspannrad gegenüber dem Mittenrad, durch eine weitere Feder das rechte Verspannrad gegenüber dem Mittenrad verspannt. Bei einem Drehschwingungsausschlag an einem Verspannrad wird die Feder gespannt und stellt es in seine relative Ausgangslage zurück, ohne daß die Drehschwingung durch die Entkopplungsvorrichtung durchgeleitet wird.

Es ist die Aufgabe der Erfindung, eine solche Entkopplungsvorrichtung in der Weise zu verbessern, daß sie kostenkünstig herstellbar und montierbar ist und in der Funktion wirksamer ist.

Eine Lösung dieser Aufgabe gelingt mit den kennzeichnenden Merkmalen des Anspruchs 1. Wenn die Zahnräder des Entkopplungsradsatzes durch Zugfedern gegeneinander verspannt sind, wird zugleich mit der Schwingungsentkopplung eine Schwingungsdämpfung erzielt, da durch die Zugfedern die Stirnflächen der Zahnräder aneinander angelegt werden. Ein solcher Radsatz läßt sich auch kostengünstig herstellen und leicht montieren.

Ein Ausführungsbeispiel der Erfindung ist in der Zeichnung dargestellt und wird nachfolgend erläutert.
Es zeigt:

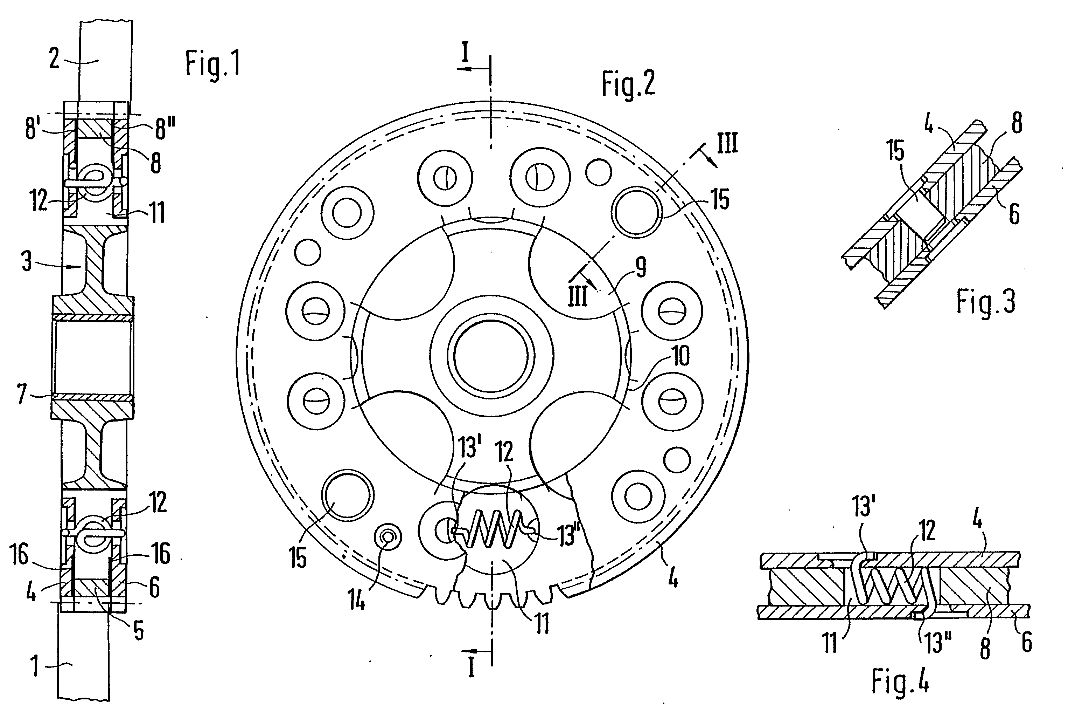

Fig. 1 Stirnzahnradgetriebe und Querschnitt durch einen Entkopplungsradsatz nach Linie I-I der Fig. 2,
Fig. 2 Frontansicht des Entkopplungsradsatzes,
Fig. 3 Querschnitt nach Linie III-III der Fig. 2,
Fig. 4 exzentrische Federverspannung.

Zwischen einem Antriebszahnrad 1 und einem Antriebszahnrad 2 eines Steuergetriebes für einen Hubkolbenmotor ist ein Entkopplungsradsatz 3 angeordnet, der zum Entkoppeln von Drehschwingungen dient, die von der Kurbelwelle und der von ihr getriebenen Nockenwelle ausgehen. Der Entkopplungsradsatz 3 ist aus drei zueinander koaxialen, stirnseitig aneinander anliegenden, durch Federn gegeneinander verspannten Zahnrädern, nämlich einem linken Verspannrad 4, einem Mittenrad 5 und einem rechten Verspannrad 6 zusammengesetzt. Das Mittenrad 5 und das linke Verspannrad 4 kämmen mit dem Antriebszahnrad 1, das Mittenrad 5 und das rechte Verspannrad 6 stehen mit dem Abtriebszahnrad 2 in Eingriff. Das Mittenrad 5 ist also loses Zwischenrad am Hubkolbenmotor in einem Gleitlager 7 gelagert. Zur Gewichtsverminderung ist die Radscheibe 8 des Mittenrades 5 mit vier symmetrisch am Umfang verteilten Halbkreisausnehmungen 9 versehen. An ihren beiden Stirnseiten $8'$ und $8''$ ist die Radscheibe 8 zur Aufnahme der Verspannräder 4 und 6 abgedreht. Die Verspannräder sind auf den so gebildeten vier sternförmigen Zentrieransätzen 10 drehbeweglich gelagert. In vier Aussparungen 11 der Radscheibe 8 liegen tangential zum Mittenrad 5 vier Schraubenfedern 12, deren umgebogene Federenden $13'$, $13''$ in Bohrungen des linken Verspannrades 4 bzw. rechten Verspannrades 6 eingehängt sind und diese in Umfangsrichtung gegeneinander verspannen. Zugleich üben die Schraubenfedern 12 eine Axialkraft auf die Verspannräder 4 und 6 aus und halten sie in Anlage an den Stirnseiten $8'$ und $8''$ der Radscheibe 8.

Um den Entkopplungsradsatz 3 leicht am Steuergetriebe montieren zu können, ist er in der vorgespannten Drehlage mit einem durch die Verspannräder 4, 6 und das Mittenrad 5 axial durchgehenden Stift 14 gesichert. Nach Einschieben des Entkopplungsradsatzes 3 in die Verzahnungen des Antriebszahnrades 1 und Abtriebszahnrades 2 wird dieser Stift 13 entfernt. Schraubenfedern 12 legen die Zahnflanken des linken Verspannrades 4 an das Antriebszahnrad 1, die Zahnflanken des rechten Verspannrades 6 an das Antriebszahnrad 2 spielfrei an, während das Mittenrad 5 mit Zahnspiel in das Antriebszahnrad 1 Abtriebszahnrad 2 eingreift.

Wird nun eine Drehschwingung entweder von der Kurbelwelle über das Antriebszahnrad 1 oder von der Nockenwelle über das Abtriebszahnrad 2 in den Entkopplungsradsatz 3 eingeleitet, so hat das zur Folge, daß die Verspannräder 4, 6 relativ zueinander verdreht und die Schraubenfedern 12 entsprechend stärker verspannt werden. Durch diese Ausgleichsbewegung findet eine Drehschwingungsentkopplung statt, die so wirksam ist, daß keine nennenswerte Schwingungsausschläge durch den Enkopplungsradsatz 3 hindurch in die nachfolgenden Getrieberäder eingeleitet werden.

Zusätzlich wird eine Schwingungsdämpfung dadurch erzielt, daß die Verspannräder 4, 6 bei der Ausgleichsbewegung an den Stirnflächen 8', 8" des Mittenrades 5 reiben. Die Reibungskraft ist durch Wahl der Federkraft der Schraubenfedern 12 vorwählbar. Die Reibungsdämpfung wird noch erhöht, indem zwischen die Verspannräder 4, 6 und das Mittenrad 5 Reibbeläge 16 eingelegt sind.

Zwei stirnseitig durch die Verspannräder 4, 6 eingesteckte und in der Radscheibe 8 des Mittenrads gehaltene Arretierbolzen 15 verhindern ein axiales Auseinandergleiten des Entkopplungsradsatzes 3 bei Erlahmen oder Bruch der Schraubenfedern 12.

## Ansprüche

1. Vorrichtung zur Entkopplung von Drehschwingungen in einem Zahnradgetriebe, insbesondere in einem aus Stirnzahnrädern bestehenden Steuergetriebe zwischen Kurbelwelle und Nockenwelle eines Hubkolbenmotors, wobei zwischen einem Antriebszahnrad und einem Antriebszahnrad ein mit den beiden Zahnrädern kämmender Entkopplungsradsatz angeordnet ist, der aus drei koaxial nebeneinander angeordneten, durch Federn gegeneinander verspannten Zahnrädern, nämlich einem linken Verspannrad, einem Mittenrad und einem rechten Verspannrad zusammengesetzt ist, dadurch gekennzeichnet, daß in Aussparungen (11) des Mittenrades (5) tangential zu ihm liegend Zugfedern (12) angeordnet sind, die mit ihren einen Federenden (13") am linken Verspannrad (4), mit den anderen Federenden (13") am rechten Verspannrad (6) eingehängt sind.

2. Vorrichtung nach Anspruch 1, dadurch gekennzeichnet, daß die Zugfedern (12) Schraubenfedern (12) mit zwei umgebogenen Federenden (13', 13") sind, deren Einhängpunkte exzentrisch zur Längsachse der Schraubenfedern (12) liegen.

3. Vorrichtung nach Anspruch 1 und 2, dadurch gekennzeichnet, daß alle drei Zahnräder (4, 5, 6) des Entkopplungsradsatzes (3) stirnflächig aneinander anliegen.

4. Vorrichtung nach Anspruch 1 und 2, dadurch gekennzeichnet, daß der Entkopplungsradsatz (3) vier symmetrisch an seinem Umfang verteilte Schraubenfedern (12) enthält.

5. Vorrichtung nach Anspruch 3, dadurch gekennzeichnet, daß die Zahnräder (4, 6) an ihren Stirnflächen mit Reibbelägen (16) versehen sind.

6. Vorrichtung nach Anspruch 1, dadurch gekennzeichnet, daß das Mittenrad (5) etwa doppelt so breit ist wie das rechte Verspannrad (4) bzw. das linke Verspannrad (6).

7. Vorrichtung nach Anspruch 1, dadurch gekennzeichnet, daß zur Montageerleichterung die relative Drehlage der Zahnräder (4, 6) mit einem Stift (14) arretierbar ist.

8. Vorrichtung nach Anspruch 1, dadurch gekennzeichnet, daß die Axiallage der Verspannräder (4, 6) zum Mittenrad (5) durch Arretierbolzen (15) gesichert ist.

9. Vorrichtung nach Anspruch 1, dadurch gekennzeichnet, daß die Verspannräder (4, 6) auf sternförmigen Zentrieransätzen (10) des Mittenrades (5) gelagert sind.

Fig.1

Fig.2

Fig.3

Fig.4